# EUROPÄISCHE PATENTSCHRIFT

(11) **EP 0 408 987 B1**
(45) Veröffentlichungstag und Bekanntmachung des Hinweises auf die Patenterteilung: **28.12.1994**
(21) Anmeldenummer: 90112748.0
(22) Anmeldetag: 04.07.1990
(51) Int. Cl.: H02K 7/14, B25F 5/00, B25F 5/02, H02K 23/66, H02K 7/116, B25B 21/00

(54) **Elektrowerkzeug**
Electric tool
Outil électrique

(30) Priorität: 15.07.1989 DE 3923421; 14.02.1990 DE 4004464
(43) Veröffentlichungstag der Anmeldung: 23.01.1991
(73) Patentinhaber: Kress-elektrik GmbH + Co. Elektromotorenfabrik, D-72406 Bisingen (DE)
(72) Erfinder: Kress, Willy, D-7457 Bisingen (DE); Binder, Alfred, D-7457 Bisingen (DE)
(74) Vertreter: Otte, Peter, Dipl.-Ing.

(56) Entgegenhaltungen:
- BE-A- 643 674
- GB-A- 499 725
- GB-A- 2 137 430
- US-A- 3 699 366
- US-A- 3 873 862

## Beschreibung

### Stand der Technik

Die Erfindung geht aus von einem Elektrowerkzeug, insbesondere Elektrohandwerkzeug nach dem Oberbegriff des Anspruchs 1.

Bei einem bekannten Elektrowerkzeug dieser Art (US-A-3 873 862) ist ein in sich abgeschlossener, eine Handkreissäge antreibender Elektromotor mit seinem hinteren Teilbereich von einem von Lageraufgaben für Drehteile entlasteten rohrförmigen Hauptgehäuse aufgenommen, wobei das dem Getriebebereich zugewandte, aus dem Hauptgehäuse herausragende Lagerschild des Elektroantriebsmotors eine Gleitlageraufnahme für die in diesem Fall einzige Getriebehauptwelle bildet, so daß der Getriebebereich zur Seite des Elektroantriebsmotors gewandt, an welchem er angeflanscht ist, offen ist und Bauteile im Bereich des Elektroantriebsmotors selbst für seine Funktion benötigt.

Bekannt ist ferner (GB-A-2 137 430), bei einem Elektrowerkzeug einen elektrischen Schaltmodul durch Steckkontakte mit dem Antriebsmotor zu verbinden, wobei das Gehäuse allerdings nach hinten offen bleibt und lediglich durch eine Kabelzugentlastung verschlossen ist.

Üblicherweise bestehen Elektrohandwerkzeuge aus einer Vielzahl einander zuzuordnender Teile und Komponenten, die insgesamt einen Wirkungsverbund bilden und aufeinander so abgestimmt sein müssen, daß sich im Endeffekt ein auch von Laien bedienbares, elektrisch angetriebenes Werkzeug in der erforderlichen feinmechanischen Präzision und der entsprechend notwendigen Robustheit ergibt.

Dabei wird von einem durch äußere Schaltmittel jeweils aktivierbaren Elektromotor, meistens über ein Getriebe, eine Ausgangswelle angetrieben, die ihrerseits das jeweilige Werkzeug antreibt, also beispielsweise Bohrer, Kreissägenblatt, Polierscheibe o. dgl. Übliche Elektrohandwerkzeuge bestehen daher meist aus einem zweischaligen Gehäuse, in welchem diese Teile so eingelegt sind, daß das üblicherweise aus einem entsprechend harten Kunststoff (Duroplast ) bestehende Gehäuse selbst nicht nur Verkleidung oder Abdeckung, sondern gleichzeitig auch tragendes Element für die weiteren Komponenten ist und beispielsweise in Nuten oder Ausnehmungen Lager für Getriebe oder den Antriebsmotor aufnimmt, so daß das Gehäuse gleichzeitig strukturelles Lagerelement für Rotor und Stator des Antriebsmotors oder Getriebeelemente des Geräts ist.

Bei einer bekannten Handwerkzeugmaschine dieser Bauart (DE-OS 34 13 233) wird eine erste Lagerhalbschale für das dem Handgriff des Elektromotors benachbarten Rotorwellenende mit einer Gehäusehalbschale verbunden und anschließend eine vom Gehäuse getrennte Lagerbrücke, die gleichzeitig auch Träger für elektrotechnische Bauelemente ist, zur gleichzeitigen Anordnung der anderen Lagerhalbschale mit der ersten Lagerhalbschale (Lagerbock) so verbunden, daß die andere Gehäuseschale von Lageraufgaben völlig entlastet ist. Hierdurch ergibt sich auch bei noch nicht geschlossenem Gehäuse die Halterung von Kohlebürstenhaltern, Drosseln zur Funkentstörung sowie ergänzend noch vorgesehene Leuchtdioden und ferner die Möglichkeit, Überprüfungen am Gerät bei geöffnetem Gehäuse durchzuführen.

Bekannt ist ferner (DE-OS 35 02 442), bei einem Elektromotor an einem Ende des Stators eine Motorbrücke anzuordnen, die vorzugsweise in ihrer Ausbildung als Printplatte elektrische Teilkomponenten, auch Kohleführungen lagert und durch Fixierstifte sowohl mechanisch mit dem Stator verbunden als auch gleichzeitig durch entsprechende Kontaktzungen eine elektrische Kontaktverbindung mit Statorwicklungsenden eingeht. Diese Motorbrücke enthält ferner eine Aufnahmeöffnung für das zugeordnete Ankerwellen-Wälzlager, so daß sich durch die mechanische Vorfixierung am Stator auch eine Ausrichtung des Rotors zu diesem und die Luftspaltpositionierung ergibt.

Es ist ferner bekannt, zur Vereinfachung solcher Elektrohandwerkzeuge, beispielsweise Bohrmaschinen, diese, jedenfalls was den elektrischen Schaltungsbereich betrifft, unter Zugrundelegung von elektrischen Steckkomponenten aufzubauen, so daß sich der Verdrahtungsaufwand reduziert und eine Vielzahl stromleitender Teile, auch für die Drehrichtungsumkehr bzw. zur Bewirkung des Ein/Ausschaltvorgangs die Form stromleitender Stege annimmt, die in entsprechende Kunststoffteile, auch des Gehäuses eingelegt, gegebenenfalls bei deren Herstellung gleich mit umspritzt sind. So umfaßt ein bekanntes Elektrohandwerkzeug (DE-OS 36 06 926) ein Gehäuse, den antreibenden Elektromotor sowie den elektrischen Schaltungsbereich betreffende Elemente und Leitungen in Form von untereinander steckbaren Blockbausteinen.

Allgemein ist es bei Elektrohandwerkzeugen ferner bekannt (DE-PS 33 11 557), an einem Ende des Stators eines Elektromotors für ein Handwerkzeug ein brückenähnliches Halteteil anzuordnen, welches auch als Motorbrücke bezeichnet werden kann. Diese Motorbrücke ist zur Positionierung und Lagerung des auf diese Weise gehaltenen Wälzlagers für die Ankerwelle bestimmt und läßt sich beispielsweise dadurch in geeigneter Weise mit dem Stator verbinden, daß endseitig und in Richtung auf den Stator verlaufend an der Motorbrücke Stifte angeordnet sind, die ein Aufstecken der Motorbrücke auf den Stator zur Erzielung einer genauen Ausrichtung ermöglichen. Hierdurch ergibt sich gleichzeitig auch durch die Aufnahmeöffnung in der Motorbrücke für das zugeordnete Ankerwellen-Wälzlager die den Luftspalt bestimmende Endlage. Das eigentliche Ziel dieser bekannten Ankerlagerung eines Elektromotors besteht allerdings darin, den Anker zusammen mit dem auf der Ankerwelle fest angeordneten Wälzlager vor der Montage auswuchten zu können, also das Auswuchten des Ankers mit allen wesentlichen, das Ankerwellen-Wälzlager einschließenden Teilen durchzuführen, und dann den äußeren Wälzlagerring in die Aufnahmeöffnung der Motorbrücke einzusetzen.

Trotz vereinzelter Vereinfachungen in Struktur und Form ist bei den bekannten Elektrohandwerkzeugen problematisch, daß die das Handwerkzeug insgesamt bildenden Einzelteile untereinander jeweils in mehr oder größerem Ausmaß voneinander abhängig sind, daß also die Genauigkeit des zweischaligen Gehäuses gleichzeitig auch die Lagergenauigkeit des elektrischen Antriebsmotors mindestens mitbestimmt, wodurch sich zwar möglicherweise in der Anzahl der für ein Einzelteil er forderlichen Bauelemente Vorteile ergeben, die Endmontage und die Funktionsüberprüfung der Einzelkomponenten und deren Zusammenwirken jedoch um so komplizierter wird, so daß sich, was eine Erkenntnis vorliegender Erfindung darstellt, diese Entwicklungsrichtung der "interdependencies" in vielfacher Form zwischen den einzelnen Bauelementen als ein Irrweg herausstellen kann, der die Vereinfachung sowohl in Struktur, Form als auch Aufbau von Elektrohandwerkzeugen nur bis zum Erreichen eines bestimmten Schwellenwerts ermöglicht und dann umgekehrt sogar einen größeren Aufwand hinsichtlich Montage, Genauigkeitsansprüchen an die einzelnen Bauelemente, Funktionskontrolle bis hin zur Wartung und natürlich auch Reparatur solcher Geräte erforderlich macht.

Der vorliegenden Erfindung liegt daher die Aufgabe zugrunde, bei gleichzeitiger Herbeiführung eines grundsätzlichen strukturellen Wandels im Aufbau von Elektrowerkzeugen, speziell Elektrohandwerkzeugen diesen Aufbau drastisch zu vereinfachen und hierdurch eine wesentlich einfachere Endmontage des Geräts sicherzustellen, also an einem Punkt eine Verbesserung einzuführen, der sich bisher stets als besonders aufwendig und nicht weiter automatisierbar herausgestellt hat, was auch die Endfunktionsprüfung mit umfaßt.

### Vorteile der Erfindung

Das erfindungsgemäße Elektrowerkzeug löst diese Aufgabe mit den kennzeichnenden Merkmalen des Hauptanspruchs und hat den entschiedenen Vorteil, daß das Elektrowerkzeug aus einer genau definierten Anzahl von jeweils in sich abgeschlossenen Einzelkomponenten besteht, die jeweils für sich die volle Funktionstüchtigkeit schon aufweisen und daher, was ebenfalls sehr vorteilhaft ist, jeweiligen Einzelfunktionsprüfungen unterworfen werden können, so daß sichergestellt ist, daß der im Aufwand und in der Kompliziertheit drastisch reduzierten Endmontage nur solche Teile zugeführt werden, deren einwandfreie Funktion unter bestimmten Gesichtspunkten durchgeprüft und sichergestellt ist.

Dabei nimmt die vorliegende Erfindung nur scheinbar einen vermeintlichen Nachteil in Kauf, der darin besteht, daß das Herzstück jedes Elektrohandwerkzeugs, nämlich der elektrische Antriebsmotor ein in sich vollkommen abgeschlossenes, sämtliche erforderlichen Lagerungen für die Rotorwelle und deren einwandfreie Zentrierung sowie für die anderen Motoreinzelteile aufweisendes Antriebsaggregat mit entsprechender Kapselung ist, wobei dann hier mit Vorteil ein elektrischer Universalmotor eingesetzt werden kann, wie er in dem deutschen Gebrauchsmuster G 89 08 646.5 bzw. DE-OS 39 23 421 beschrieben ist. Es wird daher im folgenden auch unter Hinweis auf diese verfügbare Beschreibung von einer ins einzelne gehenden Erläuterung dieses elektrischen Universalmotors hier abgesehen, obwohl es sich versteht, daß jeder andere, ein abgeschlossenes Antriebsaggregat bildender elektrischer Antriebsmotor für die Realisierung vorliegender Erfindung ebenfalls geeignet ist, vorausgesetzt, daß ein solcher Elektromotor so aufgebaut ist, daß unter Einschluß der beidseitigen, jeweils die Rotorwellenlager umfassenden und zentriert haltenden Lagerschilder ein stabiles, in sich abgeschlossenes Aggregat vorliegt, welches im Bereich der Lagerschilder auch die Bürstenhalterung, das Lüfterrad und gegebenenfalls einen verdrehbaren Schaltring für Richtungsumkehr bzw. Ein- und Ausschalten des Elektromotors umfaßt, so daß das Gehäuse von Lagerungsaufgaben für Einzelteile des Antriebsmotors entlastet ist und lediglich so ausgebildet zu sein braucht, daß es den Antriebsmotor als Ganzes aufnehmen und beispielsweise mittels mindestens auf einer Seite vorhandener elastomerer Lagermittel halten und abstützen kann.

Die Erfindung ermöglicht es daher auch, daß das Gehäuse selbst aus mehreren, jedoch in der allgemeinen Axialrichtung des Elektrohandwerkzeugs unterteilten Bereichen besteht, wobei das Hauptgehäuseteil eine zylindrische, geschlossen rohrförmige Struktur aufweist, so wie dies bei speziell ausgebildeten Profiwerkzeugen für sich gesehen schon bekannt ist, in welche das Antriebsaggregat dann lediglich bis zum Sitzanschlag eingeschoben zu werden braucht.

Der Aufbau des erfindungsgemäßen Elektrohandwerkzeugs vervollständigt sich dann zunächst so, daß an das in sich abgeschlossene starre, selbsttragende Aggregat des Elektroantriebsmotors auf der Abtriebsseite, also dort, wo das Motorwellenendstück, entweder selbst als Zahnrad ausgebildet oder ein Ritzel tragend, das antriebsseitige A-Lagerschild überragt, an dieses das Getriebe des jeweiligen Elektrohandwerkzeugs, also beispielsweise der Winkelkopf für einen Winkelschleifer oder der Getriebekopf einer Handbohrmaschine angeflanscht wird; anschließend wird der Elektroantriebsmotor in das rohrförmige Schutzgehäuse eingeschoben,und die Verbindung mit diesem erfolgt über Bohrungen vom Getriebekopf aus, so daß der Aufbau sozusagen von hinten vorgenommen wird und der Elektromotor lediglich auf der zum Getriebe abgewandten Seite, vorzugsweise dämpfend nachgiebig mit einem Lagerschildvorsprung in eine Gehäuseausnehmung zur sicheren Halterung auch auf dieser Seite eingreift.

Anschließend kann man auf das nach hinten noch offene Gehäuse einen elektrischen Schaltmodul mit eigenem kleinen Gehäuseteil aufschieben, der sämtliche Verdrahtungen trägt und über vorzugsweise lediglich zwei Steckverbindungen, die der Schaltmodul an motorseitig vorspringenden Verlängerungen trägt, die elektrischen Schaltverbindungen mit dem Motor herstellen. Der Aufbau vervollständigt sich dann durch ein hinteres Gehäuseabdeckteil, so daß der wesentliche Vorteil eines solchen Aufbaus sofort erkennbar wird, der nämlich darin besteht, daß sich hierdurch eine hochrationelle und vor allen Dingen auch vollautomatisch ablaufende Endmontage realisieren läßt.

Dabei sichert die durch die Erfindung in einem bisher nicht gekannten Maße realisierte Modulbauweise die Möglichkeit einer vollständig abgeschlossenen Baugruppen-Vormontage einschließlich der Lieferung vollständig für sich durchgeprüfter Einzelbaukomponenten zur Endmontage sowie eine besonders einfache Gehäusekonzeption, so daß sich nicht nur im Bereich der Endmontage, sondern auch im Gehäusebereich erhebliche Kosteneinsparungen erzielen lassen.

Weitere durch die Erfindung erzielte Vorteile bestehen darin, daß sich eine wirksame Schallisolation erzielen läßt, insbesondere wird die Vibrationsübertragung durch Körperschall vermieden, da das Gehäuse eben nicht Teil des Antriebsmotors und seiner Lagerung ist, sondern den Antriebsmotor mindestens auf einer Seite über Gummiaufhängungen aufnimmt, so daß sich ein erheblich reduzierter Schallpegel ergibt. Die elektrische Kontaktierung erfolgt ausschließlich über Steckerfahnen, also Steckkontakte, wobei praktisch überhaupt keine Verdrahtung mehr vorgenommen zu werden braucht, da diese einerseits in den elektrischen Schaltmodul verlagert ist, in welchem durch entsprechend vorbereitete Printplattenverdrahtung die gewünschten elektrischen Schaltungsmöglichkeiten, auch Ansteuerung über Phasenanschnittsteuerung u. dgl. realisiert werden können, bzw. im Bereich des Elektroantriebsmotors stattfindet, der in seiner bevorzugten Ausgestaltung über eine Stanzgitter-Verdrahtungsstruktur in Verbindung mit einem drehbaren Schaltring verfügt, so daß durch entsprechende Aufbereitung von Stanzgitter-Durchbrechungen, je nach Verwendungszweck des Motors und Art und Aufbau des Elektrohandwerkzeugs, schon die hierfür notwendigen Schaltungen im Bereich des Motors vorgenommen werden können.

Durch die erfindungsgemäße Modulbauweise ergibt sich ferner eine wesentliche Servicevereinfachung, da bei Beschädigungen lediglich bestimmte Baugruppen oder Module ohne größeren Montagebedarf einfach gewechselt werden können.

Auch bei nachträglichen Neuentwicklungen entfallen größere Anpassungen, da die einzelnen Module für sich gesehen jeweils entsprechenden Entwicklungsschritten unterworfen werden können, ohne daß es hierzu notwendig ist, durchgreifend das ganze Gerät entsprechend ändern und anpassen zu müssen.

Schließlich vereinfacht sich die Herstellung von Elektrohandwerkzeugen auch im Bereich der Produktion, da für eine beliebige Anzahl von Elektrohandwerkzeugen stets das gleiche Antriebsaggregat, nämlich der in sich abgeschlossene Elektroantriebsmotor verwendet werden kann, so daß aufgrund der größeren Stückzahl sowohl die Herstellungskosten reduziert als auch die Lagerhaltung, da nur ein Elektroantriebsmotor noch erforderlich ist, verringert werden kann.

Die erforderlichen Anpassungen des Antriebsaggregats an den jeweiligen Anwendungszweck können dann im Bereich des jeweils angeflanschten Getriebekopfes bzw. auch der elektrischen Verschaltungsseite erfolgen, also im Bereich des für jede Art eines Elektrohandwerkzeugs jeweils entsprechend angepaßten elektrischen Schaltmoduls.

Durch die in den Unteransprüchen aufgeführten Maßnahmen sind vorteilhafte Weiterbildungen und Verbesserungen der Erfindung möglich. Besonders vorteilhaft ist die zusätzliche Anbringung eines weiteren Bauteils, nämlich eines äußeren Stellrings, der von außen auf den ohnehin rohrförmigen, geschlossenen Gehäusekörper bis zu einer Position geschoben werden kann, von welcher er mit nach innen durch Gehäusedurchbrechungen gerichteten Vorsprüngen auf den Schaltring im Bereich des B-Lagerschilds des Antriebsmotors ausgerichtet ist, so daß eine Schaltringverstellung zur Reversierung der Drehrichtung bzw. zum Ein- und Ausschalten des Geräts möglich ist.

Vorteilhaft ist ferner die problemlose Anpassung des jeweiligen, werkzeugspezifischen Getriebekopfes an den einen vorhandenen Universalmotor, wozu, je nach Bedarf, zwischengeschaltete Adapterplatten vorgesehen werden können.

### Zeichnung

Ausführungsbeispiele der Erfindung sind in der Zeichnung dargestellt und werden in der nachfolgenden Beschreibung näher erläutert. Es zeigen:
- die Figuren 1, 2 und 3: für eine spezielle Ausführungsform eines Elektrohandwerkzeugs, nämlich einen Winkelschleifer aufeinanderfolgende Montagevorgänge, wobei aus der Abfolge der Figuren 1, 2 und 3 besonders gut der Modulcharakter bei vorliegender Erfindung hervorgeht und wobei
- die Figuren 4, 5 und 6: eine mit der Darstellung der Figuren 1, 2 und 3 vergleichbare Abfolge von aufeinanderfolgenden Montagevorgängen zunächst in der auseinandergezogenen Position der Fig.4 (entsprechend Fig. 1), daran anschließend in der teilmontierten Position der Fig. 5 (entspricht Fig. 2) und schließlich in der endmontierten Position der Fig. 6 (entsprechend Fig.3) für eine Handbohrmaschine;
- Fig. 7: zeigt nochmals in vergrößerter Darstellung eine Seitenansicht des rohrförmigen Hauptgehäuses, speziell für den Winkelschleifer der Figuren 1, 2 und 3, während die
- Fig. 8: in einem Teilausschnitt die Aufnahme des Elektroantriebsmotors in dem rohrförmigen Hauptgehäuse (nur teilweise dargestellt) zeigt in Verbindung mit einer geschnitten Teildarstellung des äußeren Stellrings und seinem Durchgriff auf den Elektromotor-Schaltring;
- Fig. 9: zeigt in einer Ansicht von oben das rohrförmige Hauptgehäuse und angrenzend zu diesem zeigt die
- Fig. 10: schematisiert eine Draufsicht auf die spezielle Ausbildungsform des elektrischen Schaltmoduls, der auf und in das Gehäuse eingeschoben wird; schließlich zeigen die
- Figuren 11, 12 und 13: zum Teil auch vergrößerte Schnittdarstellungen (mit weggelassenen Teilen), aus denen sich genauer die Wirkungsfunktion des äußeren Stellrings zur Durchführung elektrischer Schaltmaßnahmen im Bereich des Elektroantriebsmotors ergibt.

### Beschreibung der Ausführungsbeispiele

Der Grundgedanke vorliegender Erfindung besteht darin, ein Elektrohandwerkzeug durch axiales Ineinanderfügen und Befestigen einzelner Baugruppen oder Module herzustellen, die jeweils für sich vollständig vormontiert und,soweit es mechanische oder elektrische Funktionen durchführende Module betrifft, auch durchgeprüft sein können. Die einzelnen Baugruppen oder Module stellen dabei in sich abgeschlossene Funktionseinheiten dar, die in ihrer äußeren Struktur so ausgebildet sind, daß sie axiale, aufeinander abgestimmte Grenz- bzw. Anschlagflächen bilden - soweit es die Dimension betrifft, besteht natürlich auch eine radiale Übereinstimmung -, so daß durch einfaches axiales Aneinanderfügen und wo erforderlich auch Befestigen sowohl die mechanische Verbindung als auch die elektrischen Kontaktierungen, soweit diese noch erforderlich sind, hergestellt werden können, mit der sich hierdurch auch anbietenden Möglichkeit, den gesamten Endmontagevorgang vollautomatisch mittels Roboter durchführen zu können. Hierbei ergibt sich dann noch der Vorteil, daß eine eingehende Funktionsprüfung im endmontierten Zustand nicht mehr erforderlich ist, da die einzelnen Bauteile oder Module schon vorgeprüft und im vormontierten Funktionszustand zusammengeführt und dann noch miteinander verbunden werden.

Bevor die Erfindung im einzelnen erläutert wird, wird darauf aufmerksam gemacht, daß ein besonders bevorzugtes Ausführungsbeispiel einer elektrischen Antriebsquelle, nämlich ein speziell schon für die Erfordernisse vorliegender Erfindung ausgebildeter und endmontierter, in sich abgeschlossener elektrischer Universalmotor umfassend beschrieben ist im DE-GM G 89 08 646.5, dessen Priorität hier beansprucht ist, so daß im folgenden dieser Antriebsmotor lediglich noch so weit, speziell von seiner äußeren Form her erläutert wird, wie dies zum Verständnis der Erfindung notwendig ist. Es wird aber darauf aufmerksam gemacht, daß die verfügbare Beschreibung dieses bekannten Antriebsmotors ausdrücklich zum offenbarten Gegenstand auch der vorliegenden Erfindungsbeschreibung gemacht und auf diese verwiesen wird.

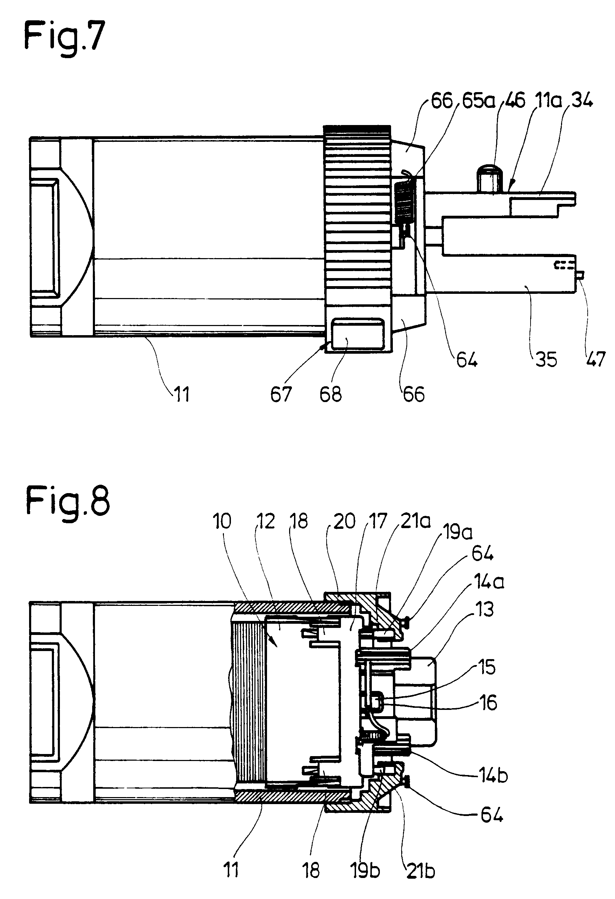

Andererseits eignen sich für die Realisierung vorliegender Erfindung auch sonstige, in sich abgeschlossene Universalmotoren, sofern sie über die folgenden Eigenschaften aufweisen, auf die daher zunächst anhand der Darstellung der Fig. 8 eingegangen wird.

Die Fig. 8 zeigt den elektrischen Universalmotor als geeignete Antriebsquelle für die Realisierung vorliegender Erfindung bei 10; er befindet sich in der Teildarstellung der Fig. 8 innerhalb eines rohrförmigen Hauptgehäuses 11 (hierauf wird weiter unten noch eingegangen) und ist von allgemein zylindrischer Form, wobei ein B-Lagerschild 12 so ausgebildet ist, daß es auf dieser Seite eine Nabe 13 für das B-Lager der Rotorwelle bildet, die einstückig von gerippten beidseitigen Trägern 14a, 14b gehalten ist. Auf der nach außen gerichteten äußeren Ringfläche (nicht sichtbar) des B-Lagerschilds liegt verdrehbar ein auch die Bürsten 15 in Köchern 16 tragender Schaltring. Gegen axiales Abfallen ist dieser Schaltring von einem Sicherungsring 17 gehalten, der mit nach innen vorspringenden Arretiernasen 18 am B-Lagerschild 12 verankert ist.

Um die Drehbewegung des Schaltringes durchführen zu können, wodurch, wie in dem schon erwähnten Gebrauchsmuster bzw. der entsprechenden DE-OS 39 23 421 beschrieben eine Drehrichtungsumkehr bzw. das Ein/Ausschalten des Elektromotors möglich ist, sind am Schaltring axiale Vorsprünge 19a, 19b vorgesehen, die dadurch mit einem äußeren Stellring 20 in Wirkverbindung treten, daß dieser beidseitig nach innen gerichtete Vorsprünge 21a, 21b aufweist, die die Vorsprünge 19a, 19b des Schaltrings umfassen, so daß dieser sich bei Verdrehung des äußeren Stellrings 20 mitdreht. Hierdurch lassen sich für die jeweilige Drehrichtung nicht nur die Bürsten entsprechend in einer neuen Winkellage orientieren, sondern auch die erforderlichen elektrischen Umschaltungen herstellen.

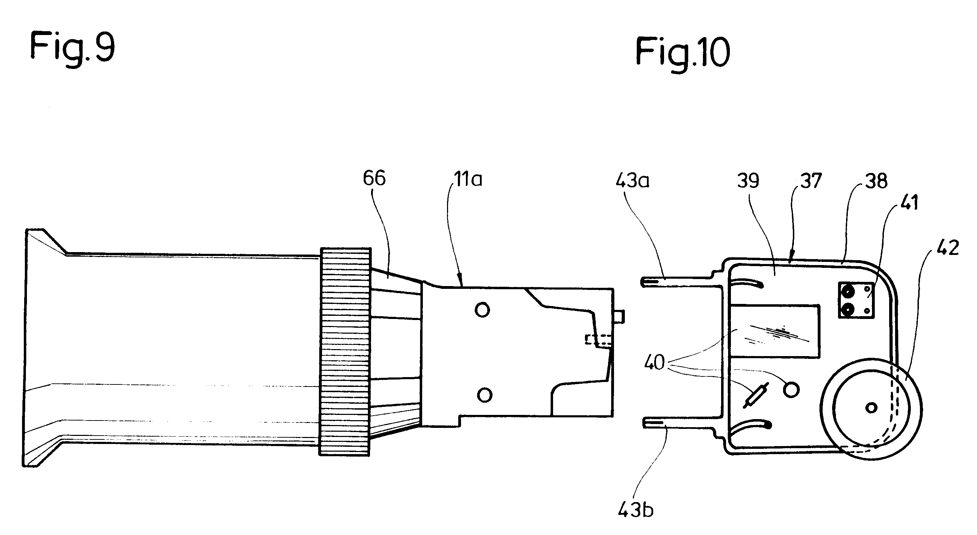

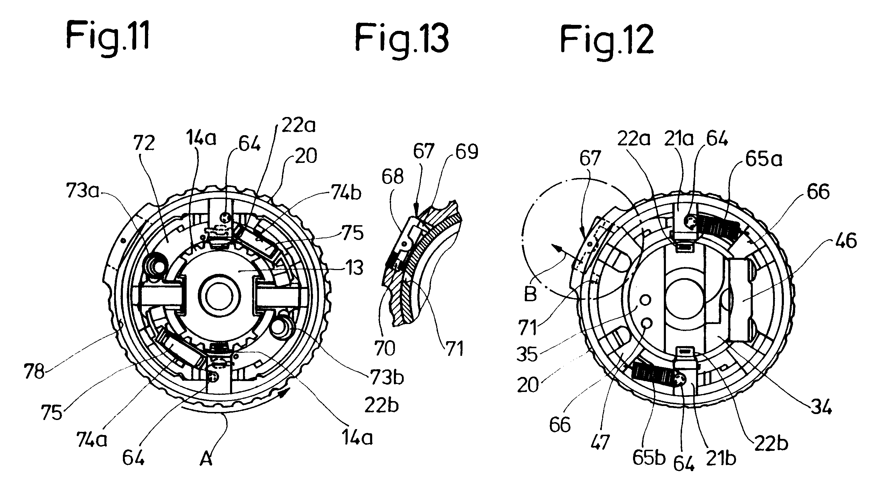

Wesentlich ist noch, daß in an sich beliebiger Position, bei dem dargestellten Ausführungsbeispiel innerhalb der beidseitigen Träger 14a, 14b des B-Lagerschilds 12 jeweils ein äußerer Anschlußsteckkontakt (nur in den Figuren 10 und 11 bei 22a, 22b erkennbar) befindet, die die beiden einzigen Stromzuführungen für den Antriebsmotor darstellen, die dann mit einer äußeren Stromzuführung zu verbinden sind, bei dem dargestellten Ausführungsbeispiel durch Steckverbindung mit dem elektrischen Steckmodul, auf den weiter unten noch eingegangen wird.

Schließlich wird mit Hinblick auf die Fig. 8 noch darauf hingewiesen, daß in dieser Schnittdarstellung aus Gründen eines besseren Verständnisses das rohrförmige Hauptgehäuse nicht über den äußeren Stellring in der Zeichenebene nach links weiter dargestellt ist, wie dies daher genauer der Darstellung der Fig. 7 entnommen werden kann, so daß man in Fig. 8 die B-seitigen Motoreinzelheiten besser erkennen kann.

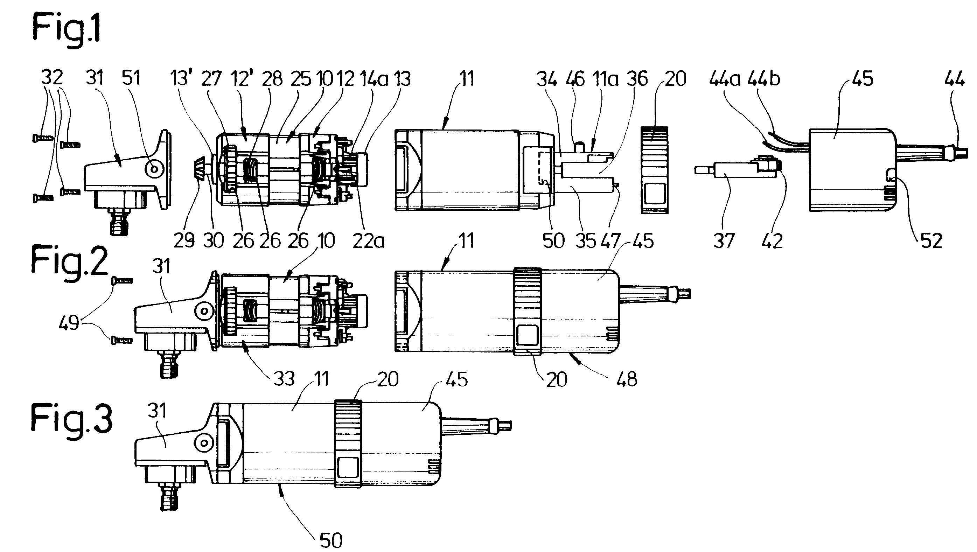

Im folgenden wird jetzt zunächst genauer auf die modularen Zusammenhänge der Grundstruktur des Elektrohandwerkzeugs anhand der Darstellung der Figuren 1-3 bzw. 4-6 genauer eingegangen.

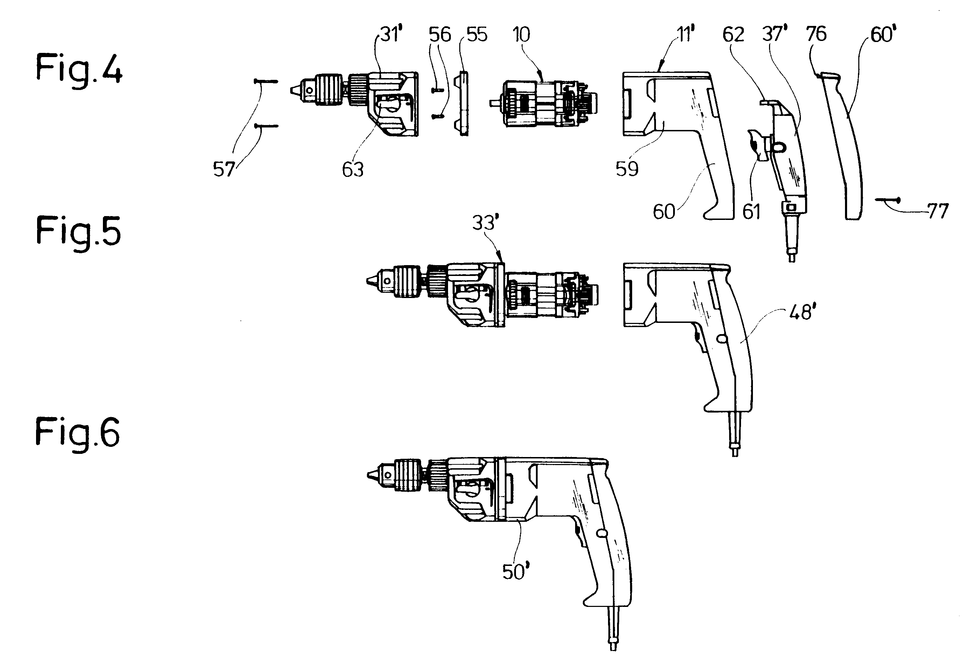

Der in Fig. 1 gezeigte elektrische Antriebsmotor 10 entspricht der insoweit schon erläuterten Ausführungsform entsprechend Fig. 8 und umfaßt ein zentrales Statorpaket 25, welches beidseitig durch topfförmige Lagerschilde 12 (B-Lagerschild) bzw. 12′ (A-Lagerschild) umfaßt ist. Durch geeignete Maßnahmen, die in der erwähnten DE-OS ausführlich erläutert sind, sitzen diese Lagerschilde in fester Verbundenheit am Stator und bilden endseitig die Naben 13 und 13′ für die Rotorwelle, wobei durch (Lüftungs)Durchbrechungen 26 in den Lagerschilden Teile des Lüfterrads 27 bzw. der Statorwicklung 28 erkennbar sind. Da die Motordarstellung der Figuren 1 bzw. 4 gegenüber der Darstellung der Fig. 8 um 90° gedreht ist, erkennt man in dieser Position auch auf der einen Seite den elektrischen Steckkontakt 22a im Bereich des Nabenträgers 14a.

Wie erkennbar handelt es sich bei dem Antriebsmotor 10 um einen in sich abgeschlossenen, die Rotorwelle zentriert durch eigene Mittel lagernden Elektromotor, wobei noch eine Besonderheit darin besteht, daß das A-Lagerschild 12′ zusätzlich zu der stabilen Kunststoff-Hohlform auf der axialen Endfläche noch durch eine metallische Scheibenunterlegung (innen) verstärkt sein kann, die eine zentrale Durchtrittsöffnung für die ein Antriebsritzel 29 tragende Rotorwelle 30 bildet. Es ist daher möglich, an diese äußere Ringfläche des A-Lagerschilds eine entsprechend ausgebildete zugewandte Ringfläche eines der Art des jeweiligen Elektrohandwerkzeugs entsprechenden Getriebekopfes 31 anzuflanschen, durch eine entsprechende Anzahl von Schraubverbindungen 32, so daß in einem ersten Montageschritt der in sich abgeschlossene Antriebsmotor mit einem in sich abgeschlossenen Getriebekopf 31 eine Kombinations-Teilbaueinheit 33 bildet, die keiner externen Lagerungen mehr bedarf, da sie eine stabile, abgeschlossene kompakte Funktionseinheit bildet.

Die modulare Ausgangssituation für die Endmontage vervollständigt sich noch durch die weiteren, aus der Fig. 1 ersichtlichen Teilkomponenten, nämlich das weiter vorn schon erwähnte Hauptgehäuse 11, welches eine zylindrisch-rohrförmige Form aufweist (also keine Halbschalenstruktur), mit einem hinteren gegabelten Aufnahmevorsprung 11a, so daß sich eine allgemein U-förmige Form dieses Vorsprungs 11a ergibt, mit einem oberen Schenkel 34 und einem unteren Schenkel 35. Der Abstand 36 zwischen diesen beiden Schenkeln ist so bemessen, daß ein elektrisches Schaltmodul 37 in den Aufnahmevorsprung 11a eingeschoben werden kann, wobei dieses elektrische Schaltmodul bei dem Ausführungsbeispiel der Figuren 1, 2 und 3, welches sich auf einen Winkelschleifer bezieht, die in Fig. 10 in Draufsicht dargestellte Form hat. Der Schaltmodul kann daher so ausgebildet sein, daß er selbst ein nach einer Seite offenes Teilgehäuse mit einem hochgezogenen Rand 38 bildet, in welchem sich eine Printplatte 39 befindet, die einige elektrische Bauelemente 40 lagert, ferner eine Lüsterklemme 41 sowie ein von außen durch eine Rändelung betätigbares Einstellrädchen 42. Ferner, und dies ist von wesentlicher Bedeutung, gehen von dem elektrischen Schaltmodul zwei Vorsprünge 43a, 43b aus, die in Steckkontakten enden. Wird jetzt der elektrische Schaltmodul 37 in den Aufnahmehohlraum 36 des Hauptgehäuses 11 eingeführt, wobei der schon erwähnte Stellring 20 zunächst nicht berücksichtigt zu werden braucht, dann ragen die in Steckkontakte mündenden Kontaktanschlüsse 43a, 43b jedenfalls so weit in das innere rohrförmige Hauptgehäuse 11 hinein, daß beim weiteren Zusammenbau die elektrische Steckverbindung mit den unverdrehbaren, da nicht von der Schaltplatte getragenen Motoranschlußsteckkontakten 22a, 22b möglich ist. Damit ist aber im wesentlichen auch sofort die Verdrahtung des Elektrohandwerkzeugs vollständig erledigt, bis auf den Umstand, daß die beiden Drähte 44a, 44b der elektrischen Zuleitung 44 noch mit den beiden Anschlüssen der Lüsterklemme 41 im elektrischen Schaltmodul 37 verbunden werden müssen. Hierzu wird am besten so vorgegangen, daß die durch ein hinteres Gehäuseabschlußteil 45 hindurchgeführten Anschlußdrähte 44a, 44b zunächst unter eine Zugentlastung 46 am oberen Schenkel 34 des Hauptgehäuses 11 geführt und dann, nachdem der elektrische Schaltmodul in die Öffnung 36 eingeführt ist, nach Umbiegen mit der Lüsterklemme 41 verbunden werden. Man kann dann noch ein rückwärtiges, diese zweite Kombinations-Teileinheit 48 (Fig. 2) zu vervollständigendes topfförmiges Abdeck-Teilgehäuse 45 auf das Hauptgehäuse 11 aufschieben, in entsprechender Ausrichtung auf einen am unteren Schenkel 35 vorspringenden Richtzapfen 47 - und dann schließlich noch durch beispielsweise eine einzige Schraubverbindung sichern.

Anschließend ist es lediglich noch erforderlich, die beiden Kombinations-Teilbaueinheiten 33 und 48 der Fig.2 ausgerichtet axial ineinander zu schieben, wodurch sich sozusagen automatisch das in Fig. 3 gezeigte, vollständig fertige endmontierte Elektrohandwerkzeug hier in Form eines Winkelschleifers 50 ergibt, wobei sichergestellt ist, daß durch das Einschieben von Antriebsmotor mit angeblocktem Getriebekopf in die vervollständigte Gehäuseform auch gleichzeitig die elektrischen Anschlüsse hergestellt sind. Man erkennt auch, daß das Gehäuse hier lediglich noch eine abdeckende Funktion, jedoch keine spezifischen Lageraufgaben im Bereich sich bewegender Teile übernimmt.

Die Befestigung von Motor mit Getriebe am zusammengesetzten Gehäuse kann dadurch erfolgen, daß der Getriebekopf einen sich über die Motorabmessungen erstreckenden radialen Ringflansch aufweist, an welchen der vordere Gehäusebereich anschlägt und dann durch entsprechende weitere Schrauben 49 mit dem Getriebe verschraubt wird. Durch das Einschieben bis in die Endposition ergibt sich dann gleichzeitig noch die Aufnahme des Nabenvorsprungs 13 am Motor in einer entsprechenden, in Fig. 1 gestrichelt angedeuteten inneren Gehäuseausnehmung 50, wobei diese mit Vorteil von elastomerer Beschaffenheit sein kann oder eine elastomere topfförmige Einlage aufweist, so daß der Motor an dieser Stelle vibrationsfrei und gedämpft gehalten und unterstützt wird, zusätzlich zu der Verschraubung des Getriebes am vorderen Gehäuserand.

Auf eine Besonderheit ist noch hinzuweisen - je nach der Beschaffenheit des so aus modularen Einzelbauteilen hergestellten Elektrohandwerkzeugs werden die jeweiligen elektrischen und mechanischen Umschaltmöglichkeiten ausgelegt; Umschaltungen im Bereich des mechanischen Getriebes, beispielsweise zwischen verschiedenen Gängen oder auch zwischen den Funktionen Bohren einerseits und Schlagbohren andererseits erfolgen im Bereich des Getriebekopfes 31, beispielsweise durch Betätigen eines bei 51 angedeuteten Stellrads oder Stellhebels; Reversierungen der Drehrichtung dort, wo diese gewünscht sind, erfolgen zweckmäßigerweise und mit Vorteil grundsätzlich immer durch Verdrehen des Schaltrings im Bereich des B-Motorlagerschilds 12, da sich hierdurch auch gleich die Winkelposition der Kohlen zum Kollektor zur Optimierung des Wirkungsgrads mit einstellen lassen.

Andererseits ist es aber bei solchen Geräten, bei denen eine Drehrichtungsumkehr nicht erwünscht ist wie gerade bei dem in den Figuren 1-3 dargestellten Winkelschleifer, auch möglich, die durch den äußeren Stellring 20 und die Verdrehung des Schaltrings gebotene Möglichkeit zum Ein- und Ausschalten des Gerätes auszunutzen, so daß der elektrische Schaltmodul von dieser Aufgabe befreit ist und dann lediglich noch dazu dient, bei diesem dargestellten Ausführungsbeispiel die Drehzahl des Antriebsmotors einzustellen, nämlich über das nach außen durch seine Öffnung 52 im hinteren Gehäuseabdeckteil 45 zugängliche Rändeleinstellrad 42.

Ist daher eine Betätigung des Schaltrings zur Drehrichtungsumkehr oder zum Ein- und Ausschalten des Geräts erwünscht - dies hängt natürlich von der jeweiligen Beschaffenheit der zugeordneten Stanzgitterplatte ab, die die elektrische Verdrahtung vorgibt -, dann wird auf das Hauptgehäuse 11 noch der schon erwähnte Stellring 20 aufgeschoben - auf die bei einem Winkelschleifer hierdurch gebotene Möglichkeit des Ein- und Ausschaltens des Geräts wird nachfolgend noch anhand der Darstellung der Figuren 10, 11 und 12 eingegangen.

Die Figuren 4, 5 und 6 zeigen unter Beibehaltung der erfindungsgemäßen Grundkonzeption - nämlich fünf Hauptmodule oder Baugruppen und deren axiale Zusammenfügung zunächst zu übergeordneten Teilgruppen, die dann in einem weiteren Schritt das endgültige Gerät ergeben - deren Anwendung auf eine Elektrohandbohrmaschine, wobei die einzelnen Module oder Baugruppen zum Teil erheblich unterschiedliche Gestalt aufweisen, jedoch die gleiche, weiter vorn schon ausführlich erwähnte Funktion erfüllen.

Identisch kann der auch hier vorgesehene elektrische Antriebsmotor 10 verwendet werden; die anderen Baugruppen oder Module sind mit den gleichen Bezugszeichen, jedoch zur Unterscheidung wegen ihrer unterschiedlichen Form durch einen Beistrich oben gekennzeichnet.

Ist beispielsweise der Getriebekopf 31′ für eine Handbohrmaschine, da er zusätzlich eine Gangumschaltung und/oder eine Möglichkeit zum Umschalten auf Schlagbohren aufweist, von größeren Abmessungen, dann wird eine Adapterplatte 55 zusätzlich verwendet, die fest mit dem A-Lagerschild des Antriebsmotors 10 mittels Schrauben 56 verbunden dann der Befestigung am Getriebekopf 31′ über weitere Schrauben 57 dient. Diese Schrauben können dann aber auch gleichzeitig dafür verwendet werden, die so hergestellte, in Fig. 5 bei 58 gezeigte Untereinheit oder Kombinations-Teilbaueinheit mit dem vervollständigten Hauptgehäuse 11′ zu verbinden, welches bei dieser Ausführungsform aus einem rohrförmigen Hauptgehäuseteil 59, sinnvollerweise mit einem an diesem sofort angeformten Pistolenteilgriff 60 besteht.

Daher ist auch der elektrische Schaltmodul 37′ bei diesem Ausführungsbeispiel von unterschiedlicher Gestalt, nämlich allgemein länglich der Pistolengrifform folgend und auch insofern vollständig fertig elektrisch aufgebaut und verdrahtet, daß der nach außen beim Einsetzen in die Hauptgehäuseform 11′ vorstehende "Gasgebehebel" 61 betätigbar ist.

Auch bei diesem Ausführungsbeispiel verfügt der elektrische Schaltmodul 37′ über axial in Richtung auf den Antriebsmotor vorspringende Steckkontaktträger-Ansätze 62, so daß bei paßgerechtem Einsetzen des elektrischen Schaltmoduls 37′ in die Hauptgehäuseform 11′, was durch geeignete Führungen und Passungen problemlos erzielt werden kann, und nachfolgende Abdeckung der hinteren Öffnung mittels eines den Pistolenhandgriff vervollständigenden Gehäuseabdeckteils 60′, auch die zweite, den Gehäusebereich betreffende Untereinheit als zweite Kombinations-Teilbaueinheit 48′ vervollständigt ist und sich der endgültige Aufbau dann durch einfaches axiales Zusammenbringen dieser beiden Teilbaueinheiten 33′ und 48′ zur fertiggestellten Endform 50′ der Fig. 6 realisiert.

Bei dieser Ausführungsform erfolgt die mechanische Umschaltung im Bereich des Getriebes (Gangschaltung bzw. Umschaltung zwischen Bohren und Schlagbohren) mittels eines dort vorgesehenen Stellhebels 63, während für den Ein- und Ausschaltvorgang sowie für die Einstellung der Drehzahl das elektrische Schaltmodul 37′, beide Funktionen betätigt durch den Gasgebehebel 61, zuständig ist.

Soll bei der in den Figuren 4-6 dargestellten Handbohrmaschine auch noch eine Drehrichtungsumkehr, je nach Ausführungsform und Komfort, möglich sein, dann wird dem rohrförmigen Bereich des Hauptgehäuses 11′ noch der weiter vorn und auch im folgenden ausführlich erläuterte bzw. zu erläuternde Stellring 20 zugeordnet, der dann in entsprechender Ausbildung der Stanzgitterform im Motorinneren gleichzeitig mit der Bürstenverdrehung die Drehrichtungsumkehr durch Winkelverstellung am Schaltring bewirkt. Auch in diesem Fall greifen dann die Vorsprünge 21a, 21b am äußeren Stellring 20 durch sich über einen vorgegebenen Winkelbereich erstreckende Gehäuseöffnungen, die im übrigen von dem Stellring abgedeckt sind, auf die Betätigungszapfen am Schaltring über.

Dient der äußere Stellring zur Ein- und Ausschaltung des Geräts, wie dies bei dem weiter vorn schon beschriebenen Winkelschleifer der Fall ist, dann weist der Schaltring noch eine zusätzliche, lediglich durch eine Auslösung aktivierte Einrichtung zur automatischen Rückstellung auf, wie in den Figuren 11, 12 und 13 gezeigt. In diesem Fall greifen an zusätzlichen Befestigungszapfen 64 an den nach innen gerichteten Vorsprüngen 21a, 21b der Stellrings 20 (s. Fig. 7, 8, 11) Rückstellfedern 65a, 65b an, die rückwärtig an gehäusefesten Stegen 66 festgemacht sind, die, sich konusförmig verjüngend, den hinteren inneren U-förmigen Aufnahmevorsprung 11a des Hauptgehäuses 11 tragen.

Ferner lagert der Stellring 20 noch eine Arretieranordnung 67, bei dem dargestellten Ausführungsbeispsiel bestehend aus einer etwa mittig gelagerten Wippe 68, die auf der einen Seite in einer abgebogenen Arretiernase 69 endet und deren andere Seite durch eine eigene kleine Vorspannungs-Druckfeder 70 so vorgespannt ist, daß die Arretiernase 69 nach innen drückt. Man erkennt aus der Darstellung der Figuren 11, 12 und 13, daß dann, wenn der äußere Stellring im Gegenuhrzeigersinn entsprechend dem Pfeil A verdreht wird - bei entsprechender Mitnahme des Schaltrings im Motorinneren über die Vorsprünge 21a, 21b, bei Erreichen einer vorgegebenen Position die Arretiernase 69 in eine gehäusefeste Ausnehmung 71 einfällt und der äußere Stellring 20 auch bei Loslassen dann in dieser Position verbleibt. Bei dem den Winkelschleifer betreffenden Ausführungsbeispiel läßt sich auf diese Weise das Gerät einschalten und in der Einschaltposition wie geschildert arretieren, wobei das andere Ende der Wippe entsprechend den Pfeil B in Fig. 11 nach außen tritt. Drückt man dann zum Ausschalten des Geräts auf dieses Wippenende, dann löst sich die Arretiernase 39 wieder aus der Halteöffnung 71, der äußere Schaltring 20 schnellt in seine Ursprungsposition zurück, nimmt aufgrund der entsprechend stark bemessenen Kraft der Rückholfedern 65a, 65b den Schaltring im Bereich des B-Lagerschildes des Antriebsmotors mit und schaltet auf diese Weise das Gerät ab.

Da die rückwärtige Kante der Schaltwippe 68 in der eingeschalteten Position über die Abmessungen von Schaltring bzw. Gehäuse hinausragt, genügt es bei entsprechender Positionierung auch schon, daß man das Gerät lediglich ablegt, wodurch aufgrund des geräteeigenen Gewichts die Schaltwippe zurückgedrückt und die Rückbewegung des Stellrings 20 ausgelöst wird.

In der Darstellung der Fig.11 erkennt man im übrigen den die Bürsten lagernden Schaltring, der dort mit 72 bezeichnet ist; die Fig. 10 stellt insofern eine Draufsicht der Fig. 8 in der Zeichenebene von rechts dar, während die Fig. 11 der Darstellung der Fig. 7, ebenfalls in einer Ansicht von rechts entspricht, also bei auf das Hauptgehäuse 11 aufgesetztem Schaltring, jedoch entferntem Antriebsmotor. In der Fig. 11 sind schließlich noch die Vorspannungsfedern 73a, 73b für die Kohlen sowie gesonderte Aufnahmeköcher 74a, 74b erkennbar, die der Aufnahme von Drosseln 75 für die Entstörung des Antriebsmotors dienen.

Die Befestigung des Pistolengriffrückteils als hinteres Gehäuseabdeckteil 60′ beimAusführungsbeispiel der Figuren 4, 5 und 6 kann im übrigen so erfolgen, daß ein nach oben gerichteter einstückiger Haken 76 am Gehäuseabdeckteil 60′ in eine entsprechende innere Ausnehnung am Gehäusehauptteil 11′ eingreift und das ganze dann noch durch eine zusätzliche Schraube 77 unten gesichert wird.

## Patentansprüche

1. Elektrowerkzeug, insbesondere Elektrohandwerkzeug wie Handbohrmaschine, (Winkel)Schleifer, Säge, Stichsäge, Schlagbohrmaschine, Bohrhammer, Poliergerät u.dgl., mit einem in sich abgeschlossenen Elektroantriebsmotor (10), einem an einer von einem der Lagerschilde (12, 12′) des Elektroantriebsmotors (10) gebildeten Befestigungsfläche an diesem befestigten Getriebebereich, welcher zur abgewandten Seite die Werkzeugaufnahme bildet und einem die modulare Untereinheit aus Elektroantriebsmotor und an diesem befestigten Getriebebereich bis zu einem Getriebeanschlag aufnehmenden, mindestens teilweise einstückig rohrförmigen, von Lageraufgaben für Drehteile entlastetem Hauptgehäuse (11, 11′),
dadurch gekennzeichnet, daß
a) die die Rotorwelle (30) beidseitig zentriert lagernden Lagerschilde (12, 12′) fest mit dem Stator (25) verbunden sind, daß
b) der Getriebebereich als in sich abgeschlossener Getriebekopf (31, 31′) ausgebildet ist, daß
c) die elektrischen Schaltelemente für Ein/Ausschaltung und/oder Drehrichtungsumkehr einen elektrischen Schaltmodul umfassen, der in eine vom Getriebekopf abgewandten endseitigen Aufnahme (11a, 60) des Hauptgehäuses (11, 11′) so weit eingeführt ist, daß Steckkontaktträger (43a, 43b; 62) mindestens indirekt mit Gegensteckkontakten (22a, 22b) am Antriebsmotor (10) in elektrische Wirkverbindung treten und daß
d) ein hinterer Gehäuseabdeckteil (45, 60′) die nach Einsatz des Schaltmoduls (37, 37′) verbleibende hintere Gehäuseöffnung verschließt.

2. Elektrowerkzeug nach Anspruch 1, dadurch gekennzeichnet, daß Antriebsmotor (10) mit angeflanschtem Getriebekopf (31, 31′) eine erste miteinander fest verbundene Kombinations-Teilbaueinheit (33, 33′) und das Hauptgehäuse (11, 11′) mit von ihm aufgenommenem elektrischen Schaltmodul (37, 37′) und der das Hauptgehäuse (11, 11′) verschließende hintere Gehäuseabdeckteil (45, 60′) eine zweite Kombinations-Teilbaueinheit (48, 48′) bilden, die durch axiales, teleskopartiges Ineinanderschieben dadurch miteinander verbunden werden, daß der Getriebekopf an der vorderen, ihm zugewandten Ringfläche des rohrförmigen Hauptgehäuses (11, 11′) befestigt wird.

3. Elektrowerkzeug nach Anspruch 1 oder 2, dadurch gekennzeichnet, daß am Getriebekopf (31, 31′) ein Ringflansch vorgesehen ist, durch den in das Hauptgehäuse eingeschraubte Schrauben geführt sind.

4. Elektrowerkzeug nach einem der Ansprüche 1-3, dadurch gekennzeichnet, daß der elektrische Antriebsmotor (10) im Hauptgehäuse (11, 11′) einerseits über die Getriebekopfbefestigung gehalten ist und sich andererseits mit einem inneren vorspringenden Nabenteil (13) in einer entsprechenden Aufnahmeöffnung des Hauptgehäuses (11, 11′) abstützt.

5. Elektrowerkzeug nach Anspruch 4, dadurch gekennzeichnet, daß zur Geräusch- und Vibrationsisolierung der innere Nabenteil (13) am B-Lagerschild (12) des Antriebsmotors (10) von einer elastomeren Einlage im Hauptgehäuse (11, 11′) gehalten ist.

6. Elektrowerkzeug nach einem der Ansprüche 1-5, dadurch gekennzeichnet, daß der einstückig geschlossene rohrförmige Bereich des Hauptgehäuses mindestens den Antriebsmotor (10) umschließt.

7. Elektrowerkzeug nach einem der Ansprüche 1-6, dadurch gekennzeichnet, daß der Antriebsmotor (10) einen um vorgegebene Winkelbeträge verdrehbaren Schaltring (72) aufweist zum Ein/Ausschalten und/oder zur Drehrichtungsumkehr mit gleichzeitiger Bürstenverstellung.

8. Elektrowerkzeug nach Anspruch 7, dadurch gekennzeichnet, daß das Hauptgehäuse (11, 11′) mindestens teilweise von einem äußeren, manuell zu betätigenden Stellring (20) umgeben ist, der drehfest mit dem Schaltring (72) des Antriebsmotors (10) verbunden ist.

9. Elektrowerkzeug nach Anspruch 7 oder 8, dadurch gekennzeichnet, daß der Stellring (20) mit nach innen gerichteten Vorsprüngen (21a, 21b) durch Gehäuseöffnungen greift derart, daß bei der durch axiales Zusammenschieben bewirkten Endmontage in axialer Richtung verlaufende Betätigungszapfen (19a, 19b) am Schaltring (72) axial in Aufnahmeöffnungen der Stellringvorsprünge (21a, 21b) gelangen.

10. Elektrowerkzeug nach Anspruch 9, dadurch gekennzeichnet, daß bei Betätigung des Ein/Ausschaltvorgangs über den äußeren Stellring (20) dieser eine bei Auslösung automatisch wirksam werdende Rückstellung aufweist.

11. Elektrowerkzeug nach einem der Ansprüche 1-10, dadurch gekennzeichnet, daß der elektrische Schaltmodul (37, 37′) in Verbindung mit dem ihn aufnehmenden Hauptgehäuse (11, 11′) so ausgebildet ist, daß am elektrischen Schaltmodul befindliche Stellglieder (Rändelrad 42; Ein/Ausschalter, gegebenenfalls kombiniert mit über eine Phasenanschnittsteuerung wirksamen Drehzahlerhöhungsmitteln) zur manuellen Betätigung von außen zugänglich sind.

12. Elektrowerkzeug nach einem der Ansprüche 1-11, dadurch gekennzeichnet, daß bei Durchführung der Drehrichtungsumkehr über den vom äußeren Stellring (20) betätigten Schaltring (72) im Bereich des Antriebsmotors die verbleibenden beiden elektrischen Anschlüsse für die Motorstromversorgung durch axiale Steckverbindungen direkt zwischen motorseitigen Steckkontakten (22a, 22b) und im Hauptgehäuse (11, 11′) befestigtem elektrischen Schaltmodul (37, 37′) erfolgt, wobei der elektrische Schaltmodul entweder unmittelbar mit einem äußeren Stromzuführungskabel verbunden ist oder das Zuführkabel durch den hinteren Gehäuseabdeckteil (45) zum Schaltmodul geführt ist.

13. Elektrowerkzeug nach einem der Ansprüche 1-12, dadurch gekennzeichnet, daß die Aufnahme (Zwischenraum 36) für den elektrischen Schaltmodul (37) im Hauptgehäuse (11) von einer gegabelten inneren Gehäusefortsetzung (11a) des Hauptgehäuses (11) gebildet ist, deren mindestens einer Schenkel (35) bis zum Anschlag an das hintere Gehäuseabdeckteil reicht, zur Herstellung einer Schraubverbindung zwischen beiden. (Fig. 1)

14. Elektrowerkzeug nach einem der Ansprüche 1-13, dadurch gekennzeichnet, daß der äußere Stellring (20) über axiale und/oder radiale Führungsnuten (Abschulterung) am äußeren Gehäuse (11, 11′) gelagert ist.

15. Elektrowerkzeug nach Anspruch 14, dadurch gekennzeichnet, daß der äußere Stellring (20) bis auf eine vom äußeren Gehäuse (11) gebildete Abschulterung auf dessen rohrförmigen Teil aufgeschoben ist und gegen ein Abziehen durch das aufgesetzte hintere Gehäuseabdeckteil (45) gehalten ist, dessen vorderer Rand in eine Ringnut (78) am Stellring eingreift.

16. Elektrowerkzeug nach einem der Ansprüche 1-15, dadurch gekennzeichent, daß Zugentlastungsklemmen (46) für das Zuleitungskabel am hinteren Vorsprung (11a) des Hauptgehäuses (11) oder direkt am elektrischen Schaltmodul (37′) angeordnet sind.

## Claims

1. An electric tool, in particular an electric hand tool such as a hand drill, an (angle) grinder, a saw, a compass saw, a hammer drill, a drill hammer, a polishing device and the like, having a self-contained electric drive motor (10), a gear region secured at a securing face formed by one of the end shields (12, 12′) of the electric drive motor (10) to the latter and forming the tool receiver on the remote side, and a modular sub-assembly comprising electric drive motor and a gear region secured thereto reaching as far as a main housing (11, 11′) which receives a gear abutment, is at least partially tubular in one piece, and is relieved of bearing functions for rotary parts,
characterized in that
a) the end shields (12, 12′) which support the rotor shaft (30) in centred manner on either side are fixedly connected to the stator (25), in that
b) the gear region is constructed as a self-contained gearhead (31, 31′), in that
c) the electric switching elements for switching on/off and/or for reversal of the direction of rotation include an electric switching module which is introduced into an end receiver (lla, 60) of the main housing (11, 11′), remote from the gearhead, far enough for pin contact carriers (43a, 43b; 62) to come at least indirectly into electric operative contact with counter-pin contacts (22a, 22b) on the drive motor (10), and in that
d) a rear housing cover part (45, 60′) closes the rear housing opening which remains once the switching module (37, 37′) has been inserted.

2. An electric tool according to Claim 1, characterized in that the drive motor (10) forms, together with the flanged-on gearhead (31, 31′), a first mutually fixedly connected combination part structural unit (33, 33′) and the main housing (11, 11′), together with the electric switching module (37, 37′) received thereby, and the rear housing cover part (45, 60′) closing the main housing (11, 11′), form a second combination part structural unit (48, 48′), and these are connected to one another by axial telescopic pushing one into the other by the gearhead being secured to the front annular face, facing it, of the tubular main housing (11, 11′).

3. An electric tool according to Claim 1 or 2, characterized in that an annular flange is provided on the gearhead (31, 31′) and screws which are screwed into the main housing are guided through it.

4. An electric tool according to one of Claims 1-3, characterized in that the electric drive motor (10) in the main housing (11, 11′) is on the one hand held by way of the gearhead securing means and is on the other hand supported by means of an inner projecting hub part (13) in a corresponding receiving opening in the main housing (11, 11′).

5. An electric tool according to Claim 4, characterized in that, for insulation against noise and vibration, the inner hub part (13) is held against the B end shield (12) of the drive motor (10) by an elastomeric insert in the main housing (11, 11′).

6. An electric tool according to one of Claims 1-5, characterized in that the tubular region, closed as one piece, of the main housing surrounds at least the drive motor (10).

7. An electric tool according to one of Claims 1-6, characterized in that the drive motor (10) has a switching ring (72) which is rotatable by predetermined angular amounts, for switching on/off and/or for reversal of the direction of rotation, with simultaneous adjustment of the brushes.

8. An electric tool according to Claim 7, characterized in that the main housing (11, 11′) is surrounded at least partially by an external, manually actuable setting ring (20) which is connected non-rotatably to the switching ring (72) of the drive motor (10).

9. An electric tool according to Claim 7 or 8, characterized in that the setting ring (20) reaches by means of inwardly directed projections (21a, 21b) through housing openings in such a way that on final assembly, effected by axial pushing together, actuating lugs (19a, 19b) on the switching ring (72) come axially into receiving openings in the setting ring projections (21a, 21b).

10. An electric tool according to Claim 9, characterized in that when the switching on/off procedure is actuated by way of the external setting ring (20) the latter has a resetting function which automatically becomes active on release.

11. An electric tool according to one of Claims 1-10, characterized in that the electric switching module (37, 37′) is constructed, in conjunction with the main housing (11, 11′) receiving it, in such a way that actuators (knurled wheel 42; on/off switch, possibly combined with speed increasing means which are active by way of a phase control) located on the electric switching module are externally accessible for manual actuation.

12. An electric tool according to one of Claims 1-11, characterized in that, when the reversal of the direction of rotation is carried out by way of the switching ring (72) actuated by the external setting ring (20) in the region of the drive motor, the two remaining electric connections for power supply to the motor are made through axial pin connections directly between the pin contacts (22a, 22b) on the motor side and the electric switching module (37, 37′) secured in the main housing (11, 11′), where the electric switching module is either directly connected to an external power supply cable or the supply cable is guided to the switching module through the rear housing cover part (45).

13. An electric tool according to one of Claims 1-12, characterized in that the receiver (intermediate space 36) for the electric switching module (37) in the main housing (11) is formed by a forked inner housing extension piece (11a) of the main housing (11), whereof at least one limb (35) reaches far enough to abut against the rear housing cover part, for the production of a screw connection between the two. (Fig. 1.)

14. An electric tool according to one of Claims 1-13, characterized in that the external setting ring (20) is mounted on the external housing (11, 11′) by way of axial and/or radial guide grooves (shoulder formation).

15. An electric tool according to Claim 14, characterized in that the external setting ring (20) is pushed, as far as a shoulder formation formed by the external housing (11), onto the tubular part thereof and is held in a manner preventing withdrawal by the placed-on rear housing cover part (45), whereof the front edge engages in an annular groove (78) on the setting ring.

16. An electric tool according to one of Claims 1-15, characterized in that strain relief clamps (46) for the supply cable are arranged on the rear projection (lla) of the main housing (11) or directly on the electric switching module (37′).

## Revendications

1. Outil électrique notamment outil électrique à main tel que perceuse, meuleuse d'angle, scie, scie sauteuse, perceuse à percussion, perforateur, appareil de polissage ou analogue, comprenant un moteur électrique (10) séparé, une zone de transmission fixée à une surface de fixation formée par l'un des panneaux de palier (12, 12′) du moteur électrique (10) et dont le côté opposé constitue le porte-outil, ainsi qu'un boîtier principal (11, 11′) au moins partiellement constitué par une pièce tubulaire en un seul morceau, déchargé des fonctions de palier des pièces tournantes, et logeant le sous ensemble modulaire formé du moteur électrique et d'une zone de transmission fixée à celui-ci, jusqu'à une butée de transmission,
caractérisé en ce que,
a) les panneaux de palier (12, 12′) qui logent de manière centrée de part et d'autre l'axe de rotor (30) reliés solidairement au stator (25),
b) la zone de transmission est réalisée sous la forme d'une tête de transmission (31, 31′) fermée,
c) les éléments de commutation électriques marche/arrêt et/ou d'inversion de sens de rotation comprennent un module électrique de commutation qui est introduit dans un logement (11a, 60) du boîtier principal (11, 11′) du côté opposé à la tête de transmission, suffisamment profondément pour que les supports de contact d'enfichage (43a, 43b ; 62) arrivent en coopération électrique au moins directement avec les contacts des fiches opposés (22a, 22b) du moteur (10),
d) une partie arrière de panneau de boîtier (45, 60′) ferme l'ouverture du boîtier, arrière, qui subsiste après mise en place du module de commutation (37, 37′).

2. Outil électrique selon la revendication 1, caractérisé en ce que le moteur (10) et la tête de transmission (31, 31′) fixés par bride constituent une première combinaison partielle solidaire (33, 33′) et le boîtier principal (11, 11′) ainsi que le module de commutation (37, 37′), électrique qu'il reçoit et la partie de panneau de boîtier (45, 60′) arrière qui ferme le boîtier principal (11, 11′) forment une seconde combinaison partielle (48, 48′) qui sont reliées par engagement télescopique axial, la tête de transmission étant fixée à la surface annulaire avant, tournée vers la tête de transmission et appartenant au boîtier principal tubulaire (11, 11′).

3. Outil électrique selon la revendication 1 ou 2, caractérisé par une bride annulaire prévue sur la tête de transmission (31, 31′) qui est traversée par les vis logées dans le boîtier principal.

4. Outil électrique selon l'une des revendications 1 à 3, caractérisé en ce que le moteur électrique (10) est maintenu dans le boîtier principal (11, 11′) d'une part par l'intermédiaire de la fixation de la tête de transmission et d'autre part par une partie de moyeu (13) en saillie vers l'intérieur, qui s'appuie dans un logement de réception correspondant du boîtier principal (11, 11′).

5. Outil électrique selon la revendication 4, caractérisé en ce que pour assurer l'isolation vis-à-vis des bruits et des vibrations, la partie intérieure de moyeu (13) est maintenue contre le panneau de palier B (12) du moteur (10) dans un insert en élastomère dans le boîtier principal (11, 11′).

6. Outil électrique selon une des revendications 1 à 5, caractérisé en ce que la zone tubulaire fermée, en une seule pièce du boîtier principal entoure au moins le moteur (10).

7. Outil électrique selon l'une des revendications 1 à 6, caractérisé en ce que le moteur (10) comprend un anneau de commutation (72) susceptible de tourner suivant des valeurs angulaires prédéterminées, pour la marche/arrêt/ou l'inversion de sens de rotation avec réglage simultané des balais.

8. Outil électrique selon la revendication 7, caractérisé en ce que le boîtier principal (11, 11′) est entouré au moins partiellement par un anneau de réglage (20) extérieur, actionné manuellement, et qui est relié solidaire en rotation à la bague de commutation (72) du moteur électrique (10).

9. Outil électrique selon la revendication 7 ou 8, caractérisé en ce que la bague de réglage (20) vient prendre avec des saillies (21a, 21b) dirigées vers l'intérieur à travers des ouvertures du boîtier de façon qu'au montage final obtenu par emmanchement axial, les tétons de l'actionnement (19a, 19b) dirigés suivant la direction axiale arrivent sur la bague de commutation (72), axialement dans des ouvertures de réception des saillies de la bague de réglage (21a, 21b).

10. Outil électrique selon la revendication 9, caractérisé en ce que lorsqu'on actionne la marche/arrêt, par la bague de réglage extérieure (20), cette bague présente une position de retour qui devient automatiquement active lors du déclenchement.

11. Outil électrique selon l'une des revendications 1 à 10, caractérisé en ce que le module de commutation électrique (37, 37′) est réalisé en liaison avec le boîtier principal (11, 11′) qu'il reçoit, de façon que les organes de réglage équipant le module de commutation électrique (roue moletée 42; commutateur marche/arrêt et le cas échéant combiné par une commande de découpage de phase coopérant avec des moyens d'augmentation de la vitesse de rotation) sont accessibles de l'extérieur pour une commande manuelle.

12. Outil électrique selon l'une des revendications 1 à 11, caractérisé en ce que lorsqu'on effectue une inversion de sens de rotation par la bague de commutation (72) actionnée par la bague de réglage (20), extérieure, au niveau du moteur, les deux branchements électriques restant pour l'alimentation électrique du moteur se fait par des liaisons d'enfichage axial, directement entre les contacts d'enfichage (22a, 22b) du côté du moteur et le module de commutation électrique (37, 37′) fixé dans le boîtier principal (11, 11′), le module de commutation électrique étant relié soit directement à un câble d'alimentation électrique extérieur soit que le câble d'alimentation passe par la partie de couvercle de boîtier (45), intérieure pour arriver jusqu'au module de commutation.

13. Outil électrique selon l'une des revendications 1 à 12, caractérisé en ce que le logement (chambre intermédiaire 36) du module de commutation électrique (37) dans le boîtier principal (11) est formé par un prolongement intérieur (11a) en fourche du boîtier principal (11) dont au moins une branche (35) arrive jusqu'en butée contre la partie de couvercle de boîtier arrière pour réaliser une liaison vissée entre ces deux parties (figure 1).

14. Outil électrique selon l'une des revendications 1 à 13, caractérisé en ce que la bague de réglage extérieure (20) est logée sur le boîtier extérieur (11, 11′) par l'intermédiaire de rainures de guidage axiales et/ou radiales (épaulement).

15. Outil électrique selon la revendication 14, caractérisé en ce que la bague de réglage extérieure (20) est glissée sur sa partie tubulaire jusqu'à l'épaulement formé par le boîtier extérieur (11) et est maintenue contre l'extraction par la partie arrière de boîtier (45), rapportée, dont le bord avant vient prendre dans une rainure annulaire (78) de la bague de réglage.

16. Outil électrique selon l'une des revendications 1 à 15, caractérisé en ce que les bornes de décharge en traction (46) du câble d'alimentation sont prévues au niveau de la saillie arrière (11a) du boîtier principal (11) ou directement sur le module de commutation (37′), électrique.
